# EUROPÄISCHE PATENTANMELDUNG

(11) **EP 4 775 393 A1**
(43) Veröffentlichungstag der Anmeldung: **15.07.2026**
(21) Anmeldenummer: 26151433.5
(22) Anmeldetag: 12.01.2026
(51) Int. Cl.: B32B 17/10, E06B 3/66

(54) **VERBUNDGLAS, VERFAHREN ZU DESSEN HERSTELLUNG UND VERGLASUNGSANORDNUNG**

(30) Priorität: 12.01.2025 DE 102025000084; 13.01.2025 DE 102025000097
(71) Anmelder: Isophon Glas GmbH, 34346 Hann. Münden (DE)
(72) Erfinder: BOLD, Torsten, 34346 Hann. Münden (DE); BOLD, Tobias, 34346 Hann. Münden (DE)
(74) Vertreter: Schwarz, Diethelm

(57) **Zusammenfassung**

Die Erfindung sieht ein Verbundglas (111) für eine Fassade eines Gebäudes mit einer ersten Glasscheibe (1), die mit wenigstens einer Laminierfolie (3) mit einer zweiten Glasscheibe (2) verbunden ist, wobei eine Vielzahl von Plättchen (4) mit einer ersten Licht-absorbierenden Oberfläche (4b) und mit mindestens einer zweiten Licht-reflektierenden Oberfläche (4a) zwischen der Laminierfolie (3) und der ersten Glasscheibe (1) vorgesehen sind, wobei die Licht-absorbierende Oberfläche (4b) der Plättchen (4) der wenigstens einen Laminierfolie (3) zugewandt vorgesehen sind, und wobei die Plättchen (4) derart voneinander beabstandet angeordnet sind, dass das Verbundglas (111) in Blickrichtung (a) auf die Licht-absorbierende Oberfläche (4b) der Plättchen (4) und die mindestens eine zweite Glasscheibe (2) im Wesentlichen durchsichtig erscheint und in Blickrichtung (a) auf die reflektierende Oberfläche (4a) der Plättchen (4) und die erste Glasscheibe (1) gemäß ihrer beabstandeten Anordnung weniger durchsichtig erscheint, vor. Das Verbundglas (111) zeichnet sich dadurch aus, dass die erste Glasscheibe (1) zu ihrer Außenseite (1a) oberflächennahe Abschnitte mit veränderter Oberfläche oder Oberflächenstruktur aufweist, die in einer Richtung (a) senkrecht zur Außenseite (1a) der mindestens einen ersten Glasscheibe (1) fluchtend mit oder passgenau zu den Plättchen (4) angeordnet sind. Ebenso werden eine Verbundglas-Anordnung (50) und ein Verfahren zur Herstellung eines Verbundglases (111) beschrieben.

## Beschreibung

Die Erfindung betrifft ein Verbundglas gemäß dem Oberbegriff des Anspruchs 1 und eine Verbundglasanordnung gemäß Anspruch 8 und ein Verfahren zur Herstellung eines Verbundglases gemäß dem Oberbegriff des Anspruchs 10.

Verbundgläser, insbesondere Verbundsicherheitsgläser als Verbund zweier Glasscheiben und einer Folie werden zunehmend als Fassadenelemente eingesetzt, weil sie hohe Sicherheitserfordernisse erfüllen. Fassadenelemente erfreuen sich bereits seit einigen Jahrzehnten zunehmender Beliebtheit. Denn viele öffentliche Verwaltungsgebäude, Museen, Galerien, Konferenzgebäude, Flughafengebäude oder Verwaltungsgebäude von Konzernen sowie Bahnhofsgebäude bis hin zu modernen privaten Stadtvillen werden zunehmend mit Außenfassaden aus Glas geschaffen.

Neben Vorkehrungen zur Temperierung der Gebäude sind insbesondere bei Hochhausbauten zunehmend Probleme mit Vogelschlag aufgetreten. Zur Sichtbarmachung der Fassaden als Hindernisse für heranfliegende Vögel oder sogar Vogelscharen sind Außenverglasungen mit für die Tiere wahrnehmbaren Musterungen bedruckt, beklebt oder sonst wie versehen worden. Um die Lichtverhältnisse für Bewohner oder in derartigen Gebäuden tätige Menschen hinreichend gut gestalten zu können, sind Vogelschutzmarkierungen hinsichtlich ihres Abdeckungsgrades bei gleichzeitiger Wirkung optimiert worden. Durch periodische oder musterartige Anordnungen von kleinen Markierungselementen sind bei geringen Abdeckungsgraden von bis zu wenigen Prozentanteilen der Außenflächen gute Schutzbedingungen für heranfliegende Vögel erreicht worden.

Vogelschutzvorkehrungen sind daher bereits bei Verglasungen auf unterschiedliche Art getroffen worden. So schlägt die DE 10 2016 122 030 A1 zur Verbesserung des Vogelschutzes eine transparente Scheibe mit einem ersten optisch wirksamen Muster in einer ersten Ebene und mit einem zweiten optisch wirksamen Muster in einer zweiten Ebene vor, die in Dickenrichtung der Scheibe beabstandet von der ersten Ebene ist. Die transparente Scheibe kann ein optisch wirksames Muster mit einzelnen Musterelementen aufweisen, wobei einzelne Musterelemente in Dickenrichtung der Scheibe voneinander beabstandet sind. Durch die Beabstandung einzelner Musterelemente in Dickenrichtung der Scheibe ergeben sich relative Verschiebungen der Musterelemente zueinander, die im Anflug scheinbar dynamische Effekte hervorrufen können (Kulissenwirkung, Moire-Effekt). Auf diese Weise ergibt sich über die Musterwirkung der einzelnen Muster hinaus ein Zusammenwirken der Muster derart, dass makroskopische Muster vorliegen bzw. entstehen oder wieder verschwinden, was markant von der Bewegung eines Vogels relativ zur Scheibe abhängig sein kann. Dadurch werden die zusammenwirkenden Muster in ihrer Wirksamkeit höher sein als die Summe der Einzelwirkungen, sodass die Vogelschlagschutzwirkung verbessert wird. Es können insbesondere in zwei oder mehr Ebenen der Scheibe zwei oder mehr optisch wirksame Muster vorliegen, die aufeinander abgestimmt gestaltet sein können. Die Abstimmung kann so sein, dass in gewünschter Weise Kulissenwirkungen entstehen und/oder vermieden werden bzw. Moire-Effekte hervorgerufen werden. Die genannten Ebenen können die zwei Oberflächen einer Scheibe sein. Denkbar ist aber auch, einzelne Musterelemente im Inneren einer dicken Scheibe anzulegen.

Zur Verbesserung einer Vogelschutzfunktion von Verglasungen schlägt die EP 4 317 101 A weiter eine Mehrfachverglasung vor, die charakteristischerweise enthält eine erste Glasscheibe mit mit einer ersten nach außen gerichteten Fläche und einer der ersten Fläche gegenüberliegenden zweiten Fläche, eine zweite Glasscheibe mit einer dritten Fläche, die der zweiten Fläche zugewandt ist, und einer der dritten Fläche gegenüberliegen vierten Fläche und eine Vielzahl von Säulen, die mit der zweiten Fläche und der dritten Fläche in Kontakt stehen. Dabei weist mindestens eine der ersten, der zweiten, der dritten oder der vierten Fläche eine reflektierende Zone auf, die mit mindestens einem reflektierenden Film versehen ist, der dazu dient, ultraviolettes Licht zu reflektieren. Weiter weist mindestens eine der ersten, der zweiten, der dritten oder der vierten Fläche einen durchlässigen Bereich, der dazu dient, ultraviolettes Licht durchzulassen. Die Vielzahl der Säulen umfasst mindestens eine Säule mit einem Bereich, der mit dem mindestens einen reflektierenden Film übereinstimmt, wenn man ihn in einer Richtung senkrecht zur ersten Fläche betrachtet.

Schließlich offenbart die EP 3 672 800 B1 ein Verbundglas umfassend eine erste und eine zweite Glasscheibe sowie einen zwischen der ersten und zweiten Glasscheibe angeordneten und mit diesen verbundenen Laminierfolienverbund mit einer ersten und einer zweiten Laminierfolie. Das Verbundglas zeichnet sich dadurch aus, dass eine Vielzahl von Pailletten mit einer ersten lichtabsorbierenden Oberfläche zwischen der ersten und zweiten Laminierfolie angeordnet ist, wobei die Pailletten mit der lichtabsorbierenden Oberfläche der ersten Laminierfolie zugewandt sind und derart voneinander beabstandet angeordnet sind, dass das Verbundglas auf Seiten der lichtabsorbierenden Oberfläche der Pailletten betrachtet durchsichtig erscheint.

Die Abstände zwischen der Vielzahl von beabstandet angeordneten Pailletten sind damit bevorzugt im Wesentlichen optisch transparent bzw. durchsichtig, sodass das Verbundglas nur zwischen den Pailletten weitgehend optisch transparent ist bzw. im Prinzip durchsichtig ist. Mit entsprechender Anordnung der lichtabsorbierenden Oberfläche der Pailletten zu einer Gebäudeinnenseite kann eine Einsicht oder Durchsicht von außen eingeschränkt werden. Entsprechend eignet sich das Verbundglas als Vogelschutzglas.

Aufgrund der großen Anzahl von verglasten Hochhausbauten, insbesondere solchen, die solitär über Stadtsilhouetten hervorstehen, besteht aber bei zunehmender Dunkelheit, nachts und im Morgengrauen durch ganztägige Innenbeleuchtung der Gebäude oder deren Anstrahlung ein weiteres Problem. Insbesondere während der Zugperioden von Vögeln in deren Winter- oder Sommerregionen werden Vögel von beleuchteten oder angestrahlten Hochhäusern geradezu angezogen. Die Vögel fliegen etwa auf der Suche nach Rastplätzen oder bei der Nahrungssuche erleuchtete Fixpunkte wie Gang- oder Bürobeleuchtungen bis zu erleuchteten Monitoren hinter Glasfassaden gezielt an. Bei dem Flug auf die hell erleuchteten Zielpunkte können die Tiere die Außenverglasungen der Gebäudefassaden vor den Zielpunkten nicht erkennen und kommen so zu Tode.

Demzufolge liegt der Erfindung die Aufgabe zugrunde, einem Vogelschlag ausgesetzte Glasfassaden derart auszugestalten, dass auch während der Dunkelheit und insbesondere bei vorherrschenden Innen-Beleuchtungen in den Gebäuden eine Wahrnehmbarkeit von Außenfassaden aus Glas als Hindernisse für Vögel gewährleistet ist.

Die Aufgabe wird ausgehend von den Merkmalen des Oberbegriffs des Anspruchs 1 und 10 mit den kennzeichnenden Merkmalen der jeweiligen Ansprüche und mit einer Verbundglasanordnung gemäß Anspruch 8 gelöst.

Demgemäß sieht die Erfindung in einem ersten Aspekt ein Verbundglas, insbesondere Verbundsicherheitsgläser, für eine Fassade eines Gebäudes mit einer ersten Glasscheibe vor, die mit wenigstens einer Laminierfolie mit mindesten einer zweiten Glasscheibe verbunden ist, wobei eine Vielzahl von Plättchen mit einer ersten Licht-absorbierenden Oberfläche und mit mindestens einer zweiten Licht-reflektierenden Oberfläche zwischen der Laminierfolie und der ersten Glasscheibe vorgesehen sind, wobei die Licht-absorbierende Oberfläche der Plättchen der wenigstens einen Laminierfolie zugewandt vorgesehen sind, und wobei die Plättchen derart voneinander beabstandet angeordnet sind, dass das Verbundglas in Blickrichtung auf die Licht-absorbierende Oberfläche der Plättchen und die mindestens eine zweite Glasscheibe durchsichtig erscheinen und in Blickrichtung auf die reflektierende Oberfläche der Plättchen und die erste Glasscheibe diese gemäß ihrer beabstandeten Anordnung sichtbar sind und/oder im Vergleich zu der Seite der Licht-absorbierenden Oberfläche der Plättchen weniger durchsichtig erscheinen. Das Verbundglas zeichnet sich dadurch aus, dass die erste Glasscheibe an ihrer Außenseite oberflächennahe, vorzugsweise beabstandete Abschnitte mit veränderter oder bearbeiteter Oberfläche oder Oberflächenstruktur aufweist, die in einer Richtung senkrecht zur Außenseite der ersten Glasscheibe fluchtend mit den Plättchen oder passgenau zu den Plättchen angeordnet sind.

In einem zweiten Aspekt sieht die Erfindung dazu eine Verbundglasanordnung mit einem Verbundglas nach dem ersten Aspekt und mit wenigstens einer an einem der umlaufenden Randabschnitte des Verbundglases angebrachten Lichtquelle vor.

Schließlich sieht die Erfindung in einem dritten Aspekt ein Verfahren zur Herstellung eines einseitig durchsichtig erscheinenden Verbundglases, insbesondere eines Verbundglases nach dem ersten Aspekt vor, zum Einsatz als Außenfassadenelement oder als Innenraumgestaltungselement, insbesondere Verbundsicherheitsglas, mit den Schritten eines
- Bereitstellens einer Laminierfolienanordnung aus einer Laminierfolie und auf dieser beabstandet zueinander vorgesehenen Plättchen mit einer Licht-absorbierenden Oberfläche und einer dieser gegenüberliegenden Licht-reflektierenden Oberfläche, wobei die Plättchen mit der Licht-absorbierenden Oberfläche an der Laminierfolie festgelegt sind,
- Einbringens der Laminierfolienanordnung zwischen einer ersten und mindestens einer zweiten Glasscheibe und
- Verbindens der ersten und der mindestens einen zweiten Glasscheibe und der Laminierfolienanordnung zu einem Verbundglas unter hermetischer Verbindung der Glasscheiben entlang deren Rändern. Das Verfahren zeichnet sich durch ein Aufbringen von beabstandeten Abschnitten mit veränderter Oberfläche oder Oberflächenstruktur im Bereich der Außenseite ersten, der metallisch reflektierenden Oberfläche der Plättchen zugewandten Glasscheibe aus.

Erfindungsgemäß werden Verbundgläser, insbesondere Verbundsicherheitsgläser, oder Verbundglasanordnungen, insbesondere Verbundsicherheitsglasanordnungen an ihren in einem Einbau- bzw. Benutzungszustand eine Außenseite eines diese aufnehmenden Gebäudes bildenden Seiten mit Oberflächenveränderungen oder Oberflächenbearbeitungen derart versehen, dass diese in einer Richtung senkrecht zur Außenfläche fluchtend mit oder passgenau zu den Plättchen, sogenannten Pailletten, mit einer ersten Licht-absorbierenden, einer zweiten Licht-reflektierenden Oberfläche, die zwischen den Außenscheiben des Verbundglases beabstandet vorgesehen sind, eingebracht sind. Die entsprechend der Anordnung der Plättchen ebenfalls beabstandeten Oberflächenbearbeitungen oder Oberflächenveränderungen sind der Licht-reflektierenden Oberfläche der Plättchen dabei zugewandt vorgesehen. Von den Oberflächenbearbeitungen oder -veränderungen ausgehendes oder aus einer an parallelen Glasscheibenanordnungen üblichen Mehrfachreflexionsmusters ausgekoppeltes und auf die Licht-reflektierende Oberfläche der Plättchen geworfenes Licht wird derart von den Plättchen reflektiert, dass von außen helle Punkte bzw. Bereiche von der Außenseite sichtbar sind, die dem Anordnungsmuster der Plättchen und der Abschnitte bearbeiteter oder veränderter Oberfläche oder Oberflächenstruktur entsprechen. Ein derartig erzeugtes Muster von gegenüber einem Hintergrund helleren Punkten oder Flächen ist für heranfliegende Vögel als Hindernis wahrnehmbar und hält die Tiere von einem Anfliegen der gläsernen Außenfassaden ab. Vorzugsweise kann durch entsprechende Wahl der Anordnung und Dichte der Plättchen und der diesen zugeordneten Abschnitte mit veränderter Oberfläche oder Oberflächenstruktur im Bereich der Außenseite, die bei einer Beleuchtung einer Auskopplung der durch das Glas tretenden Lichtstrahlen dienen, ein Lichtgitter erzeugt werden, das für die Vögel als undurchdringlich erscheint und damit lebensrettend ist. Die Beleuchtung kann durch Tageslicht erfolgen, das durch künstliche Beleuchtung ergänzt werden kann. Während der Tag-Nacht-Dunkelheit erfolgt die Beleuchtung mit einer oder mehreren Lichtquellen an Randabschnitten des Verbundglases.

Die Erfindung bringt den Vorteil, dass dem Vogelschutz dienende Vorkehrungen unabhängig vom Herstellungsprozess eines Verbundglases, vorzugsweise nach einem Herstellungsprozess des Verbundglases verrichtet werden können. Ein weiterer Vorteil liegt in der relativ einfachen und kostengünstigen Herstellungsweise einer Vogelschutzfunktion des Verbundglases oder der Verbundglas-Anordnung. Darüber hinaus kann eine Vogelschutzfunktionalität von bereits verbauten Verbundgläsern erreicht werden.

Die erste Glasscheibe des erfindungsgemäßen Verbundglases ist vorzugsweise aus Weißglas gebildet, um die Licht-reflektierende Oberfläche der Plättchen durch eine Bestrahlung mit Licht einer Lichtquelle wie etwa einer Leuchtdiode effektiv hervorzuheben, um das Verbundglas so selbst während der Dunkelheit als Hindernis für Vögel ausreichend sichtbar zu machen. Die zweite Glasscheibe ist vorzugsweise auch aus Weißglas.

Bei einer Ausführungsform des erfindungsgemäßen Verbundglases sind die Abschnitte mit veränderter Oberfläche oder Oberflächenstruktur durch ein selektives Sandstrahlen der Außenseite der ersten Glasscheibe erzeugt. Dazu ist eine entsprechende Maskierung der Außenseite der ersten Glasscheibe mit Abklebungen oder Schablonen notwendig. Der Vorteil liegt hier in einer einfachen Handhabung der Glasbearbeitung.

Alternativ können die Abschnitte mit veränderter Oberfläche oder Oberflächenstruktur des erfindungsgemäßen Verbundglases mithilfe einer Oberflächengravur der ersten Glasscheibe unter Einsatz von diamantbestückten Schleifsteinen oder Siliziumkarbid-Schleifsteinen, die mit entsprechenden Antriebswerkzeugen in eine Drehbewegung versetzt werden, eingebracht werden. Auf diese Weise entfällt eine Maskierung der Außenseite der ersten Glasscheibe.

Vorzugsweise können phosphoreszierende Leuchtstoffe im Bereich der Oberflächengravur eingebracht werden.

Bei einer anderen Ausführungsform des erfindungsgemäßen Verbundglases sind die Abschnitte mit veränderter Oberfläche oder Oberflächenstruktur durch ein selektives Ätzen der ersten Glasscheibe von deren Außenseite wie etwa mit Flusssäure aufgebracht. Mit Vorteil kann so eine gleichmäßige Bearbeitung des Glases erreicht werden.

Die Abschnitte mit veränderter Oberfläche oder Oberflächenstruktur können auch durch ein selektives Bedrucken der Außenseite der ersten Glasscheibe mit einer Farbe gebildet werden, die einen phosphoreszierenden Leuchtstoff enthält. Dadurch kann mit Vorteil auf eine künstliche Beleuchtung des Verbundglases oder der ersten Glasscheibe weitestgehend verzichtet werden und natürliches Tageslicht für die Einstellung der erfindungsgemäßen Vogelschutzfunktionalität ausgenutzt werden.

Das Aufbringen der Farbe erfolgt vorzugsweise durch ein Digital- oder Siebdruckverfahren. Der Farbe kann auch ein Glaspulver unter Zusatz von entsprechenden Schmelzlacken oder Lösemitteln beigemischt werden.

Vorzugsweise enthält die Farbe Sulfide von Metallen der zweiten Hauptgruppe des Periodensystems der Elemente und/oder Zink, vorzugsweise unter Beimischung von kleinen Mengen von Schwermetallsalzen als phosphoreszierende Stoffe. Dadurch wird die Handhabung vereinfacht.

Bei einer weiteren Ausführungsform des erfindungsgemäßen Verbundglases sind die Abschnitte mit veränderter Oberfläche oder Oberflächenstruktur durch eine selektive Laserbestrahlung der Außenseite der ersten Glasscheibe gebildet.

Bei einer noch weiteren Ausführungsform des erfindungsgemäßen Verbundglases werden die Abschnitte mit veränderter Oberfläche oder Oberflächenstruktur durch eine punktweise Laserbestrahlung der Außenseite der ersten Glasscheibe erzeugt. So kann die Größe der Abschnitte mit veränderter Oberfläche oder Oberflächenstruktur gezielt und mit beliebig wählbarem Querschnitt eingestellt werden.

Vorzugsweise können durch eine Laserbestrahlung hervorgerufene, ausnehmungsartige Abschnitte mit veränderter Oberfläche oder Oberflächenstruktur mit phosphoreszierenden Leuchtstoffen und Glaspulver aufgefüllt und weiter bevorzugt unter Hinzunahme eines Einbrennlacks eingebrannt werden.

In einer weiteren bevorzugten Ausführungsform des erfindungsgemäßen Verbundglases weisen die Abschnitte mit veränderter Oberfläche oder Oberflächenstruktur in der durch die erste Glasscheibe aufgespannten Ebene eine kleinere Ausdehnung als die Pailletten oder Plättchen auf.

Bei einer noch weiteren Ausführungsform der erfindungsgemäßen Verbundglasanordnung sind an dem wenigstens einen Randabschnitt zueinander beabstandete Leuchtdioden (LEDs) angeordnet oder anbringbar. Die Vogelschutzfunktionalität kann so auch während der Dunkelheit auf einfache und kostengünstige Weise und nachrüstbar bei verbauten Verbundgläsern erreicht werden.

In einer Ausführungsform des erfindungsgemäßen Verfahrens werden die Abschnitte mit veränderter Oberfläche oder Oberflächenstruktur über einen selektiven Ätzvorgang einer Außenseite der ersten Glasscheibe erzeugt.

Die Abschnitte mit veränderter Oberfläche oder Oberflächenstruktur können bei dem erfindungsgemäßen Verfahren auch durch ein selektives Sandstrahlen einer Außenseite der ersten Glasscheibe erzeugt werden. Der Vorteil ist eine nachträgliche Bearbeitung eines Verbundglases zum Einstellen von dessen Vogelschutzfunktionalität.

Alternativ können die Abschnitte mit veränderter Oberfläche oder Oberflächenstruktur bei dem erfindungsgemäßen Verfahren eines einseitig durchsichtig erscheinenden Verbundglases mithilfe einer Oberflächengravur der ersten Glasscheibe unter Einsatz von diamantbestückten Schleifsteinen oder Siliziumkarbid-Schleifsteinen, die mit entsprechenden Antriebswerkzeugen in eine Drehbewegung versetzt werden können, eingebracht werden. Vorzugsweise können phosphoreszierende Leuchtstoffe im Bereich der Oberflächengravur zugesetzt werden.

In einer anderen Ausführung des erfindungsgemäßen Verfahrens werden die Abschnitte mit veränderter Oberfläche oder Oberflächenstruktur durch ein selektives Aufbringen einer ein phosphoreszierendes Material enthaltenden Farbe erzeugt.

Alternativ sieht das erfindungsgemäße Verfahren vor, die Oberflächenbearbeitungselemente durch eine selektive Laserbestrahlung, insbesondere mit einem CO₂-Laser zu erzeugen. Ein Einsatz derartiger Laser bei der Glasbearbeitung bringt Kostenvorteile mit sich.

Die Plättchen oder Pailletten können im Rahmen der vorliegenden Erfindung ein- oder mehrlagig aufgebaut sein. Die Form kann quaderförmig, vorzugsweise halbkonkav sein, wobei die reflektierende Oberfläche im konkaven Abschnitt angeordnet ist. Der Absorptionsgrad der lichtabsorbierenden Oberfläche kann im sichtbaren Spektralbereich mindestens 50% betragen. Die lichtabsorbierenden Oberflächen sind vorzugsweise schwarz. Die im Rahmen der Erfindung eingesetzten Plättchen oder Pailletten können den in der EP 3 872 800 B1 beschriebenen entsprechen.

Es versteht sich, dass die Erfindung auch einen Bausatz aus einem Verbundglas gemäß Anspruch 1 und an einem oder mehreren Randabschnitten davon anzubringenden Lichtquellen umfasst.

Im Folgenden wird die Erfindung anhand von Ausführungsbeispielen näher erläutert, wobei auf die in unterschiedlichen Maßstäben gehaltenen und zum Teil schematisch stark vereinfachten Figuren Bezug genommen wird. Dabei sind gleiche Teile mit den gleichen Bezugszeichen versehen. Es zeigen:
- Fig. 1: einen Schnitt durch erste Ausführungsform des erfindungsgemäßen Verbundglases in einer Explosionsansicht,
- Fig. 2: eine vereinfachte Darstellung einer zweiten Ausführungsform des erfindungsgemäßen Verbundglases,
- Fig. 3(a) - (e): eine vergrößerte Darstellung unterschiedlicher Ausführungen von erfindungsgemäßen, oberflächennahen Abschnitten mit veränderter Oberfläche oder Oberflächenstruktur,
- Fig. 4: eine Vorderansicht einer dritten Ausführungsform des erfindungsgemäßen Verbundglases,
- Fig. 5: eine Vorderansicht einer vierten Ausführungsform des erfindungsgemäßen Verbundglases,
- Fig. 6: eine perspektivische Ansicht einer Ausführungsform einer erfindungsgemäßen Verbundglasanordnung mit einer fünften Ausführungsform des erfindungsgemäßen Verbundglases,
- Fig. 7: einen Teilschnitt entlang der Linie VII-VII in Fig. 6 in einem beleuchteten Zustand in vergrößerter Darstellung und
- Fig. 8: den mit dem Buchstaben V markierten Bereich der Fig. 7 in dem erfindungsgemäßen Verbundglas in vergrößerter Darstellung.

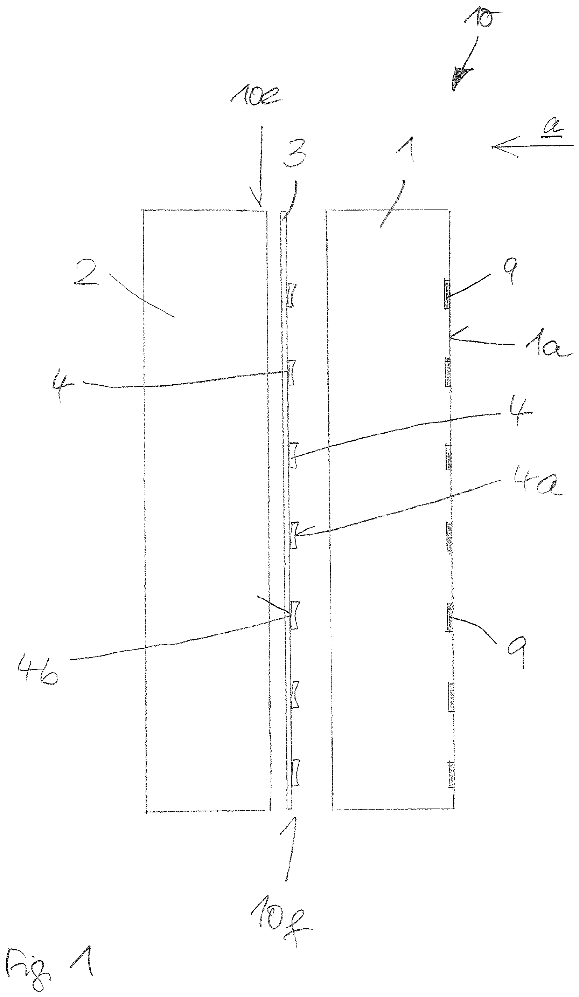

Nach Fig. 1 weist eine erste, insgesamt mit dem Bezugszeichen 10 bezeichnete Ausführungsform eines erfindungsgemäßen Verbundglases eine erste Glasscheibe 1 aus Weißglas auf, die mit einer zweiten parallel zu der ersten Glasscheibe angeordneten Glasscheibe 2 mit einer Laminierfolie 3 in an sich bekannter Weise zu einem Verbundglas 10 verbindbar ist. Auf der aus einem reißfesten und elastischen Material wie etwa Polyurethan, Ethylenvinylacetat oder Polyvinylbutyral gebildeten Laminierfolie 3 sind kleine Plättchen 4, die vorzugsweise halbkonkav geformt sind, etwa durch Verklebung oder Verpressung oder ein sonstiges Laminierverfahren aufgebracht. Die Plättchen 4 sind ein- oder mehrlagig und weisen eine Licht-reflektierende Oberfläche 4a und eine dieser gegenüberliegende Licht-absorbierende Oberfläche 4b auf. Je nach Form der Plättchen 4 wie etwa einer Quaderform oder einer Gestalt mit einem längsovalen Querschnitt beträgt deren Längs- und Querausdehnung zwischen 2 und 60 mm bei einer Dicke von 2 bis 8 mm. Vorzugsweise beträgt bei einer runden Form der Radius etwa 5 mm.

In einem Funktionszustand ist die mit den Plättchen 4 versehene Laminierfolie 3 derart zwischen den vorzugsweise als Einscheibensicherheitsglas ausgeführten ersten und zweiten Glasscheibe 1, 2 angeordnet, dass die reflektierende Oberfläche 4a der ersten Glasscheibe 1 zugewandt ist, und die erste Glasscheibe 1 eine Außenseite einer Gebäudefassade oder eines Teils davon bildet. Die Licht-reflektierende Oberfläche 4a ist im Falle eines mehrlagigen Aufbaus der auch als Pailletten bezeichneten Plättchen 4 von einem metallisch reflektierenden Polymerfilm wie etwa einem Polyesterfilm gebildet, und die Licht-absorbierende Oberfläche 4b wird von einer Licht-absorbierenden Kunststofffolie oder einem dunklen, für das menschliche Auge als schwarz wahrnehmbaren Dekorfilm gebildet.

Derartige lichtabsorbierende Elemente werden vom menschlichen Auge insbesondere im Falle eines starken Umgebungskontrastes ausgeblendet. Solche Elemente heben sich in Aufsicht nicht von ihrer Umgebung ab und werden folglich kaum oder gar nicht wahrgenommen. Demnach ist das Verbundglas 10 von der zweiten Glasscheibe 2, also von innen betrachtet im Grunde transparent. Dies ist insbesondere bei Dunkelheit der Fall. Licht-reflektierende Elemente sind in Aufsicht als hell oder glänzend wahrnehmbar. Die durch Lichtreflexion hell oder glänzend erscheinenden Elemente werden von einem Betrachter in Aufsicht auf die erste Glasscheibe 1 klar und betont vor dem Hintergrundbild dahinter wahrgenommen. Der Blick wird auf die hellen oder glänzenden Elemente gerichtet bzw. konzentriert, wodurch das Verbundglas 10 von der ersten Glasscheibe 1 her undurchsichtiger als von der entgegengesetzten Seite erscheint.

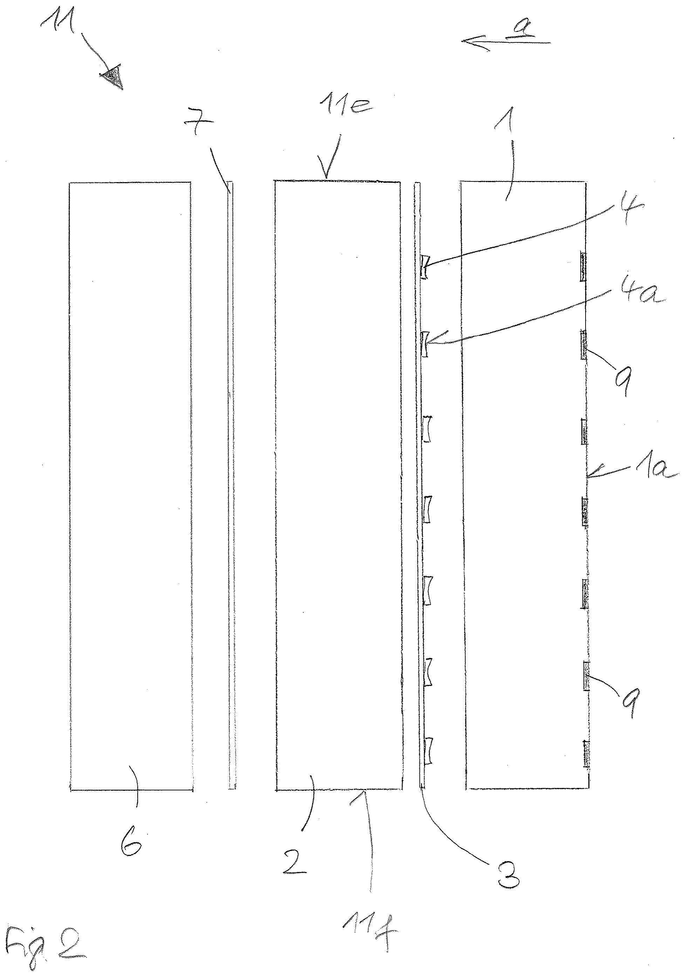

Wie in Fig. 2 dargestellt, kann bei einer weiteren Ausführungsform des erfindungsgemäßen Verbundglases 11 die zweite, in einem Einsatzzustand des Verbundglases 11 zum Innenraum eines Gebäudes weisende Glasscheibe 2 mit einer dritten Glasscheibe 6 über eine oder mehrere Laminierfolien 7 verbunden sein. Die dritte Glasscheibe 6 kann zu thermischen Isolierzwecken oder als sonstiges Funktionselement etwa hinsichtlich einer Einstellung von Abschattungszuständen oder dgl. vorgesehen oder dazu ausgebildet sein.

An oder von einer Außenseite 1a geringfügig ins Innere gehend weist die erste Glasscheibe 1 Abschnitte 9 mit veränderter, bearbeiteter oder gestörter bzw. geschädigter Oberfläche oder Oberflächenstruktur auf. Die Begriffe Abschnitte 9 mit veränderter, bearbeiteter oder gestörter bzw. geschädigter Oberfläche oder Oberflächenstruktur bezeichnen im Rahmen der Erfindung eine Veränderung der Glasstruktur an der Außenseite 1a der Glasscheibe 1 oder zur Außenseite 1 der Glasscheibe 1 hin. Die Abschnitte 9 mit veränderter, bearbeiteter oder gestörter bzw. geschädigter Oberfläche oder Oberflächenstruktur 9 sind beabstandet derart an der Außenseite 1a der ersten Glasscheibe 1 angebracht, dass sie in einer in Fig. 1 durch den Pfeil a angedeuteten Richtung senkrecht zur Außenseite 1a der ersten Glasscheibe 1 passgenau zu oder fluchtend mit den Plättchen oder Pailletten 4 auf der Laminierfolie 3 angeordnet sind. Die Abschnitte 9 mit veränderter, bearbeiteter oder gestörter bzw. geschädigter Oberfläche oder Oberflächenstruktur können im Rahmen der Erfindung auf unterschiedliche Art und

Weise bzw. Behandlungsvorgänge der Glasscheibe 1 hervorgerufen werden.

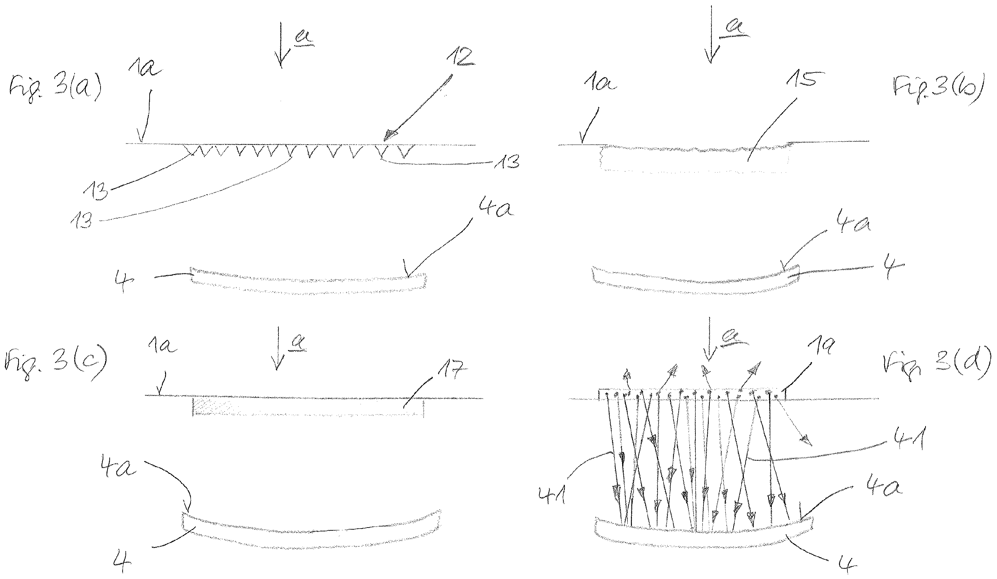

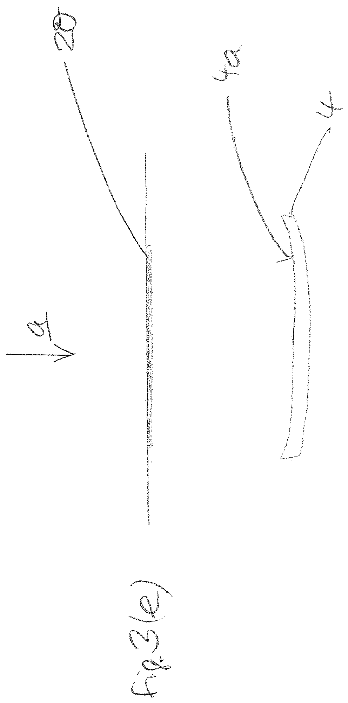

Wie anhand der Fig. 3(a) vereinfacht und exemplarisch dargestellt, kann ein Abschnitt mit veränderter, bearbeiteter oder gestörter oder geschädigter Oberfläche oder Oberflächenstruktur 12 von einer Vielzahl von im Wesentlichen trichterförmigen Gravurelementen gebildet werden, die durch eine punktweise Bestrahlung der ersten Glasscheibe 1 von deren Außenseite 1a mit einem Laserstrahl hoher Intensität wie etwa einem Strahl eines Infrarot-Lasers, beispielsweise eines CO₂-Lasers, erzeugt werden. Dabei wird durch einen fokussierten Laserstrahl Glasmaterial an der Position des Strahls unter Bildung von kegelförmigen Ausnehmungen 13 aufgeschmolzen, die zur Oberfläche 1a rekristallisieren. Der Durchmesser des Laserstrahls beträgt etwa 3 bis 4 mm, so dass ein anhand der Fig. 3(a) symbolisierter Abschnitt bearbeiteter oder gestörter oder geschädigter Oberfläche oder Oberflächenstruktur 12 von etwa fünfzig Laserschüssen hervorgerufen wird. Die Abschnitte mit veränderter oder bearbeiteter Oberfläche oder Oberflächenstruktur können wie anhand der Fig. 3(e) vereinfacht dargestellt auch mithilfe einer Oberflächengravur erzeugt werden. Dabei wird die erste Glasscheibe 1 in dem Abschnitt 20 mit über eine Antriebsvorrichtung in Drehung versetzte diamantbestückte Schleifsteine oder Siliziumkarbid-Schleifsteine bearbeitet, etwa aufgeraut oder mit kleinen Ausnehmungen versehen.

Wie in Fig. 3(b) schematisch angedeutet, kann ein Abschnitt mit veränderter, bearbeiteter oder gestörter bzw. geschädigter Oberfläche oder Oberflächenstruktur 15 durch ein selektives Ätzen der ersten Glasscheibe 1 an deren Außenseite 1a etwa mit Flusssäure-basierten Säuren erreicht werden. **In** dem geätzten Bereich 15 ist die Oberflächenstruktur gegenüber derjenigen des Glases an oder unter der übrigen Oberfläche oder Außenseite 1a der Glasscheibe 1 in ihrer Struktur verändert.

Eine weitere Methode stellt wie beispielhaft anhand der Fig. 3(c) dargestellte eine selektive Sandstrahlung der Außenseite oder Oberfläche 1a dar, durch welche über eine Maskierung der Oberfläche 1a ein aufgerauter Abschnitte mit veränderter oder bearbeiteter Oberfläche oder Oberflächenstruktur 17 in der anhand der Fig. 1 veranschaulichten Anordnung gebildet wird. Schließlich ist es im Rahmen der Erfindung auch vorgesehen, wie vereinfacht anhand der Fig. 3(d) gezeigt, bereichsweise und beabstandete Bedruckungen 19 auf der Außenseite 1a der ersten Glasscheibe 1 mit einem ein fluoreszierendes Material enthaltenden Druckfarben vorzusehen.

Nach Fig. 3 weist das erfindungsgemäße Verbundglas 1 in einer durch den Pfeil a veranschaulichten Richtung senkrecht zur Außenseite 1a der ersten Glasscheibe 1 eine passgenaue bzw. fluchtende Anordnung der Plättchen 4 oder Pailletten 4 und der Abschnitte 9 mit veränderter Oberfläche oder Oberflächenstruktur 9 auf. Dabei kann in einer ersten Ausführungsform des erfindungsgemäßen Verbundglases 1 eine regelmäßige Anordnung von Pailletten 4 und Abschnitte 9 mit veränderter Oberfläche oder Oberflächenstruktur 9 über die gesamten Breitseiten der Glasscheibe 1 und der Laminierfolie 3 vorgesehen sein. Mit der gezeigten Anordnung der über einen Laserbeschuss erzielten Oberflächenbearbeitungselemente 9 bzw. Plättchen oder Pailletten 4 ist aufgrund eines Bedeckungsgrades von weniger als 15 %, vorzugsweise weniger als 10 % und weiter bevorzugt weniger als 5 % der Glasoberfläche eine Durchsicht durch das Verbundglas 1 in ausreichendem Maß gegeben.

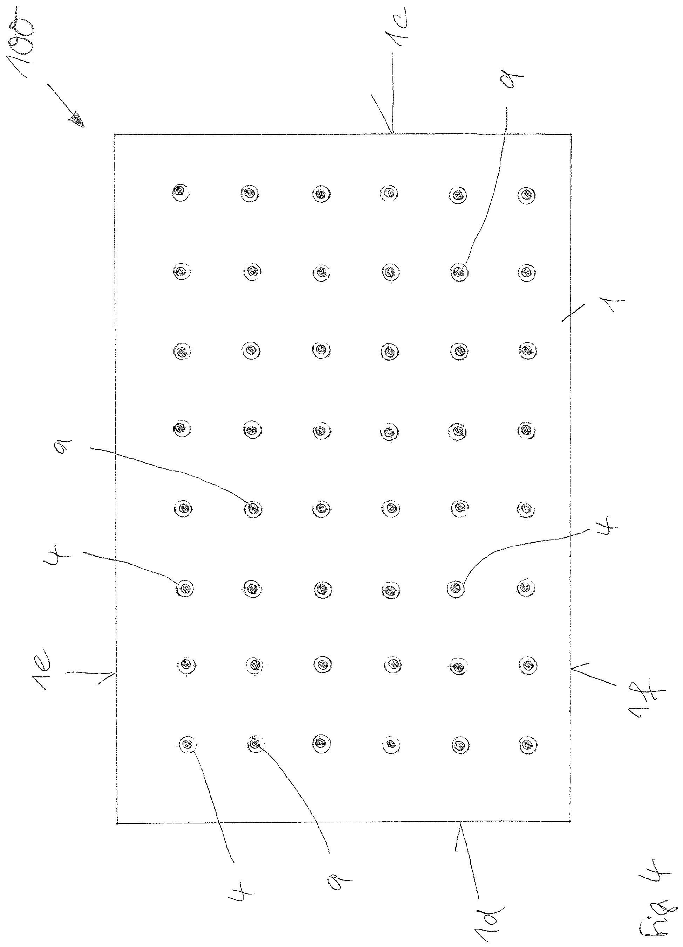

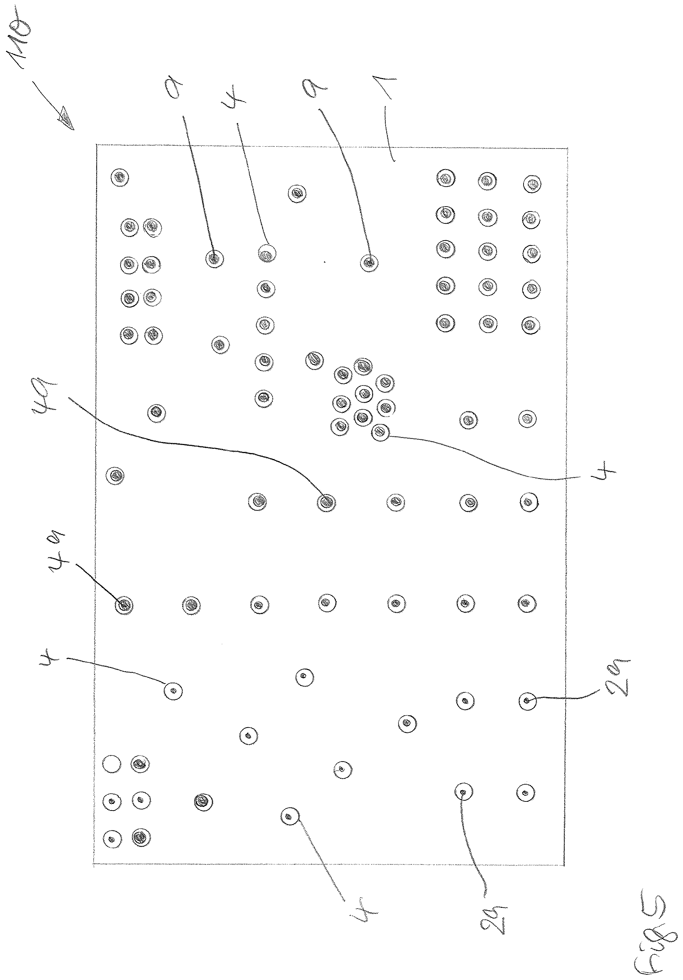

Die Bemusterungen der ersten Glasscheibe 1 bzw. der Laminierfolie 3 des Verbundglases 100, 110 mit Plättchen oder Pailletten 4 und Abschnitten veränderter Oberfläche oder Oberflächenstruktur 9 können in regelmäßigen oder unregelmäßigen Anordnungen erfolgen - Fign. 4, 5. Dabei können wie in Fig. 5 gezeigt regelmäßige Anordnungen der Plättchen 4 und der Abschnitte veränderter Oberfläche oder Oberflächenstruktur 9 mit unregelmäßigen Anordnungen bzw. Mustern gemischt sein. Ebenso können die Abstände der Plättchen 4 und der in Aufsichtrichtung zu diesen passgenau oder fluchtend orientierten Abschnitte veränderter Oberfläche oder Oberflächenstruktur 9 entlang der durch die erste Glasscheibe 1 aufgespannten Ebene unterschiedlich wählbar sein. Das heißt die Anordnung von Abschnitten mit veränderter Oberfläche oder Oberflächenstruktur 9 und Plättchen 4 kann Bereiche unterschiedlicher Dichte aufweisen.

Wie im Fall der Erzeugung der Abschnitte 9 mit veränderter Oberfläche oder Oberflächenstruktur anhand der Fig. 4 und 5 schematisch angedeutet, überlappen die Pailletten oder Plättchen 4 die Abschnitte 9 mit veränderter Oberfläche oder Oberflächenstruktur in der durch die erste Glasscheibe 1 aufgespannten Ebene (Papierebene) vorteilhaft. Die Abschnitte 9 mit veränderter Oberfläche oder Oberflächenstruktur weisen in der durch die erste Glasscheibe 1 aufgespannten Ebene eine kleinere Ausdehnung als die Pailletten oder Plättchen 4 auf. Gemäß der in Fig. 5 gezeigten Ausführungsform des erfindungsgemäßen Verbundglases 110 kann die Ausdehnung der Abschnitte mit veränderter Oberfläche oder Oberflächenstruktur entlang der durch die Glasscheibe 1 aufgespannten Ebene (Papierebene) relativ zur Ausdehnung der Plättchen 4 in der gleichen Ebene unterschiedlich sein. Neben Abschnitten veränderter Oberfläche oder Oberflächenstruktur 29 mit einer kleinen Ausdehnung können auch solche Abschnitte 9 größerer Ausdehnung bis hin zu Abschnitten 49, deren flächige Ausdehnung beinahe derjenigen der Plättchen 4 entspricht, an der Außenseite 1a der ersten Glasscheibe 1 angebracht sein.

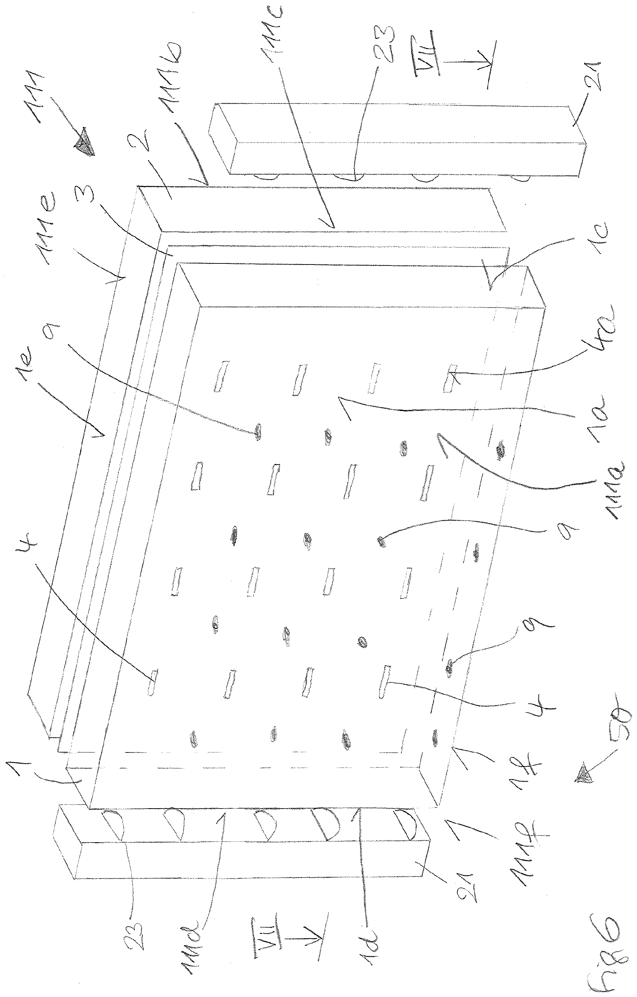

Durch ein Aufsetzen von Beleuchtungsleisten 21 auf Randabschnitte 111d, 111c des erfindungsgemäßen Verbundglases 111 wird wie in Fig. 6 vereinfacht dargestellt eine erfindungsgemäße Verbundglas-Anordnung 50 verwirklicht. Die Beleuchtungsleisten 21 weisen dabei jeweils eine Reihe von Leuchtdioden 23 auf, die zugewandt zu Randabschnitten 1c, 1d der ersten Glasscheibe 1 Licht einstrahlen können. Die Beleuchtungsleisten 21 können abnehmbar an dem Verbundglas 111 vorgesehen werden.

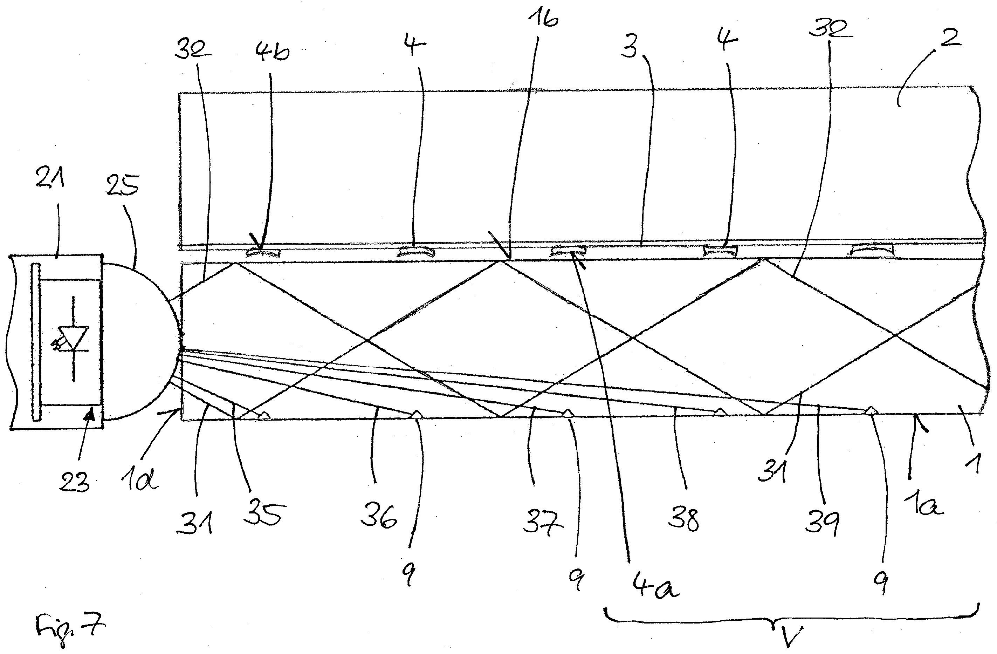

Wie in Fig. 7 schematisch veranschaulicht sind Linsen 25 der beabstandet entlang des Randabschnitts 1c, 1d der ersten Glasscheibe 1 oder entsprechender Randabschnitte des Verbundglases 111 angeordneten Leuchtdioden 23 vorgesehen, dass Randstrahlen 31, 32 des von den Leuchtdioden 23 ausgesandten Lichtes jeweils auf die die erste Glasscheibe 1 nach außen begrenzenden Außenseiten 1a und 1b an dem Übergang vom optischen Medium Glas zu einem optisch dünneren Medium - im Fall der Grenzfläche 1a zur Umgebungsluft - als dem unter dem Winkel der Totalreflexion α_{T} auftreffen und so entsprechend von der jeweiligen Grenzfläche 1a, 1b zur jeweils anderen 1b, 1a reflektiert werden. Die Randstrahlen 31, 32 durchlaufen unter jeweils einer Totalreflexion an den beiden gegenüberliegenden Grenzflächen 1a, 1b die erste Glasscheibe 1, um an dem einer Einstrahlung dienenden Randabschnitt 1d gegenüberliegenden Randabschnitt aus der ersten Glasscheibe 1 auszutreten, sofern dieser nicht ebenfalls mit einer Beleuchtungsleiste 21 versehen ist.

Alle unter einem größeren Einfallswinkel als durch den Winkel α_{T} gegebenen Winkel der Totalreflexion in die erste Glasscheibe 1 eintretenden Lichtstrahlenbündel werden ebenfalls wie anhand des Lichtstahlenbündels 33 veranschaulicht beim Auftreffen auf die Grenzfläche zwischen dem optisch dichteren Medium Glas mit einem Brechungsindex n = 1,5 auf die Umgebungsluft mit einem Brechungsindex von ungefähr n = 1 total reflektiert und durchlaufen ebenso wie die Strahlen 31, 32 die erste Glasscheibe 1 nach mehreren Reflexionen von einem Randabschnitt 1c bis zu ihrem Austritt an dem gegenüberliegenden Randabschnitt 1d.

Im Rahmen der Erfindung wird eine Beleuchtungsleiste 21 auf wenigstens einen Randabschnitt oder beide Randabschnitte 1d, 1c der ersten Glasscheibe 1 des Verbundglases 111 oder auf wenigstens einen oder beide Randabschnitte 111d, 111c des Verbundglases 111 aufgesetzt. Es versteht sich, dass die Beleuchtungsleisten 21 an zwei gegenüberliegenden oder einen Winkel von 90° bildenden Randabschnitten 1d, 1c; 1d, 1e; 1c, 1f der ersten Glasscheibe 1 oder des Verbundglases 111 angebracht werden können.

Ebenso versteht sich, dass bei einer Positionierung der Leuchtdioden 23 bzw. der Linsen 25 derart, dass die von den Leuchtdioden 23 ausgesandten Strahlen die erste Glasscheibe 1 senkrecht zu den Randabschnitten 1a, 1b bzw. 111a, 111b des Verbundglases 111 durchsetzen, das Licht randseitig eintritt und am gegenüberliegenden Rand austritt.

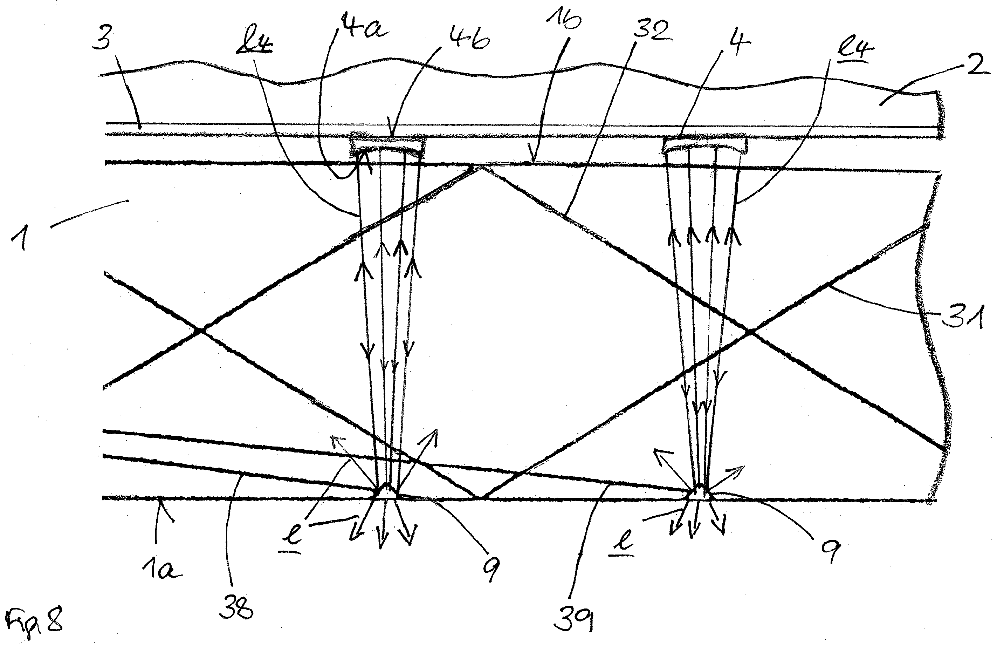

Anhand der Fig. 7 ist ein Bestrahlungszustand der ersten Glasscheibe 1 dargestellt. Trifft das von den Leuchtdioden 23 mit Hilfe der Linsen 25 in die erste Glasscheibe 1 emittierte Licht auf die Abschnitte 9 mit veränderter Oberfläche oder Oberflächenstruktur, wie anhand der Lichtstrahlen 35, 36, 37, 38 und 39 veranschaulicht, so wird durch die im Gegensatz zu den nicht veränderten oder bearbeitenden Bereichen der ersten Glasscheibe 1 in den Abschnitten 9 mit veränderter Oberfläche oder Oberflächenstruktur geänderte Struktur oder den Aufbau des Glases zu einer Unterbrechung der anhand der Lichtstrahlen 31, 32 veranschaulichten Reflexion an den Randabschnitten 1a, 1b führen. Vielmehr wird durch die kleinteilige oder aufgeraute Struktur innerhalb der Abschnitte 9 mit veränderter Oberfläche oder Oberflächenstruktur in einem Bereich nahe der Außenseite 1a der ersten Glasscheibe 1 das Licht 37, 38 "ausgekoppelt" und wie durch die Pfeile l, l₄ wie von einer Lichtquelle 9 kommend in alle Richtungen reflektiert, siehe Fig. 8. Die geänderte Struktur in den Abschnitten 9 wird durch die angeführten Bearbeitungsschritte erreicht. Im Fall einer Bearbeitung oder Änderung der Glasstruktur in den Abschnitten 9 durch einen Laserbestrahlungsvorgang trägt eine der Bestrahlung nachfolgende Rekristallisation des Glases zu einer Änderung der Struktur bei.

Die Strahlen l₄, die von den Abschnitten 9 mit veränderter Oberfläche oder Oberflächenstruktur ausgehend die Plättchen 4 an deren metallisch-reflektierender Oberfläche 4a erreichen, werden von den Plättchen 4 zum gegenüberliegenden Rand 1a reflektiert und treten aus der Außenseite 1a der Glasscheibe 1 aus und bilden die durch die Plättchen 4 und die in senkrechter Betrachtungsrichtung zu diesen passgenau und/oder fluchtend angeordneten Abschnitte 9 mit veränderter Oberfläche oder Oberflächenstruktur nach außen als Leuchtpunkte ab. Dadurch kann ein Betrachter und wie von der Erfindung angestrebt, ein heranfliegender Vogel das durch die Abschnitte 9 mit veränderter Oberfläche oder Oberflächenstruktur und die Pailletten oder Plättchen 4 gegebene Muster als Muster von Leuchtpunkten wahrnehmen und somit die ansonsten im Dunkeln nicht sichtbare erste Glasscheibe 1 bzw. das Verbundglas 111 als zu umfliegendes Hindernis wahrnehmen.

Begünstigt wird die Reflexion der durch die Abschnitte 9 mit veränderter Oberfläche oder Oberflächenstruktur aus dem Reflexionsmuster der von den Leuchtdioden 23 eingestrahlten Lichtstrahlen durch die metallisch-reflektierende konkave Oberfläche der Plättchen 4. Diese fokussiert die Strahlen l₄ bei der Reflexion von den Plättchen 4 in Richtung auf den gegenüberliegenden Rand 1a bzw. die Außenseite 1a der Glasscheibe 1 hohlspiegelartig. Erfindungsgemäß wird über eine Bestrahlung der reflektierenden Plättchen 4 strahlendes Lichtabbild dieser nach außen den anfliegenden Vögeln als Warnung vermittelt.

In der Ausführungsform der Abschnitte mit veränderter Oberfläche oder Oberflächenstruktur als mit einer phosphoreszierenden Farbe bedruckte Abschnitte 19 kann die durch die Dioden 23 eingestrahlte Lichtintensität erhöht werden. Andererseits kann in dieser Ausführungsform des erfindungsgemäßen Verbundglases auf einen Einsatz der Leuchtdioden 23 weitestgehend verzichtet werden. Denn die durch Tageslicht bestrahlten phosphoreszierenden Farbstoffe innerhalb der Abschnitte 19 mit veränderter Oberfläche oder Oberflächenstruktur kann durch die Phosphoreszenz-Eigenschaften bei einer Dunkelheit des Nachts oder im Morgengrauen ausreichende Bestrahlung der metallisch-reflektierenden Oberfläche 4c der Plättchen 4 hervorrufen und so ein Anordnungsmuster dieser nach außen als Leuchtmuster widerspiegeln, wie in Fig. 3(d) durch die Pfeile 41 symbolisiert.

Phosphoreszierende Stoffe können im Rahmen der Erfindung ebenso in die über eine Gravur oder eine Laserbestrahlung erzeugten Abschnitte veränderter Oberfläche oder Oberflächenstruktur 20 oder 13 zu den anhand der Fig. 3(d) beschriebenen Zwecken eingebracht werden.

Dazu eignen sich vorzugsweise ausnehmungsartige Gravurelemente oder die kegelförmigen Ausnehmungen 13 der Laserbestrahlung, in welche die phosphoreszierenden Stoffe eingebracht werden. Diese werden bevorzugt unter Hinzugabe von einem Glaspulver unter Hinzunahme eines Einbrennlacks als Träger- bzw. Lösungsmittel beim Erwärmen auf eine Temperatur oberhalb der Transformationstemperatur, die zur Erzeugung von Einscheibensicherheitsglas (ESG) erforderlich ist, eingebrannt und zur Erzeugung einer Vorspannung in der ersten Glasscheibe 1 abgeschreckt. Wahlweise kann dabei ein sogenanntes Diffusorpigment zugesetzt werden, um die Lichtstreuung in der trichterförmigen Ausnehmung zu erhöhen. Als Diffusorpigmente können im Rahmen der Erfindung Titanoxid (TiO₂), Bariumsulfat oder Titan-II-Oxid eingesetzt werden.

## Patentansprüche

1. Verbundglas (10, 11, 100, 110, 111), insbesondere Verbundsicherheitsglas, für eine Fassade eines Gebäudes mit einer ersten Glasscheibe (1), die mit wenigstens einer Laminierfolie (3) mit mindestens einer zweiten Glasscheibe (2) verbunden ist, wobei eine Vielzahl von Plättchen (4) mit einer ersten Licht-absorbierenden Oberfläche (4b) und mit mindestens einer zweiten Licht-reflektierenden Oberfläche (4a) zwischen der Laminierfolie (3) und der ersten Glasscheibe (1) vorgesehen sind, wobei die Licht-absorbierende Oberfläche (4b) der Plättchen (4) der wenigstens einen Laminierfolie (3) zugewandt vorgesehen sind, und wobei die Plättchen (4) derart voneinander beabstandet angeordnet sind, dass das Verbundglas (10, 11, 100, 110, 111) in Blickrichtung auf die Licht-absorbierende Oberfläche (4b) der Plättchen (4) und die mindestens eine zweite Glasscheibe (2) im Wesentlichen durchsichtig erscheint und in Blickrichtung (a) auf die reflektierende Oberfläche (4a) der Plättchen (4) und die erste Glasscheibe (1) gemäß der beabstandeten Anordnung der Plättchen (4) weniger durchsichtig erscheint,
- **dadurch gekennzeichnet, dass** die erste Glasscheibe (1) zu ihrer Außenseite (1a) hin oder an ihrer Außenseite (1a) oberflächennahe Abschnitte mit veränderter Oberfläche oder Oberflächenstruktur (9, 12, 15, 17, 19, 20) aufweist, die in einer Richtung (a) senkrecht zur Außenseite (1a) der ersten Glasscheibe (1) fluchtend mit oder passgenau zu den Plättchen (4) angeordnet sind.

2. Verbundglas nach Anspruch 1, **dadurch gekennzeichnet, dass** die Abschnitte mit veränderter Oberfläche oder Oberflächenstruktur (17) durch ein selektives Sandstrahlen der Außenseite (1a) der ersten Glasscheibe (1) erzeugt sind.

3. Verbundglas nach Anspruch 1, **dadurch gekennzeichnet, dass** die Abschnitte mit veränderter Oberfläche oder Oberflächenstruktur(20) durch eine Oberflächengravur der Außenseite (1a) der ersten Glasscheibe (1) erzeugt sind.

4. Verbundglas nach Anspruch 1, **dadurch gekennzeichnet, dass** die Abschnitte mit veränderter Oberfläche oder Oberflächenstruktur (15) durch ein selektives Ätzen der ersten Glasscheibe (1) von deren Außenseite (1a) aufgebracht sind.

5. Verbundglas nach Anspruch 1, **dadurch gekennzeichnet, dass** die Abschnitte mit veränderter Oberfläche oder Oberflächenstruktur durch ein selektives Bedrucken der Außenseite (1a) der ersten Glasscheibe (1) mit einer Farbe (19) gebildet werden, die einen phosphoreszierenden Leuchtstoff enthält.

6. Verbundglas nach Anspruch 1, **dadurch gekennzeichnet, dass** die Abschnitte (12, 13) mit veränderter Oberfläche oder Oberflächenstruktur durch eine selektive Laserbestrahlung der Außenseite (1a) der ersten Glasscheibe (1) gebildet sind.

7. Verbundglas nach Anspruch 6, **dadurch gekennzeichnet, dass** ausnehmungsartige Bereiche (13) der Abschnitte (12) mit veränderter Oberfläche oder Oberflächenstruktur mit phosphoreszierenden Leuchtstoffen versetzt sind.

8. Verbundglasanordnung (50) mit einem Verbundglas (10, 11, 100, 110, 111) nach einem der Ansprüche 1 bis 7, und mit wenigstens einer an einem der umlaufenden Randabschnitte (111d, 111c) des Verbundglases (10, 11, 100, 110, 111) angebrachten Lichtquelle (21, 23).

9. Verbundglasanordnung nach Anspruch 8, **dadurch gekennzeichnet, dass** an dem wenigstens einen Randabschnitt (1d, 1c) zueinander beabstandete Leuchtdioden (LEDs) (23) angeordnet sind.

10. Verfahren zur Herstellung eines einseitig durchsichtig erscheinenden Verbundglases, insbesondere eines Verbundglases (10, 11, 100, 110, 111) nach einem der Ansprüche 1 bis 7, zum Einsatz als Außenfassadenelement, insbesondere Verbundsicherheitsglas, mit den Schritten eines
- Bereitstellens einer Laminierfolienanordnung aus einer Laminierfolie (3) und auf dieser beabstandet zueinander vorgesehenen Plättchen (4) mit einer Licht-absorbierenden Oberfläche (4b) und einer dieser gegenüberliegenden Licht-reflektierenden Oberfläche (4a), wobei die Plättchen (4) mit der Licht-absorbierenden Oberfläche (4b) an der Laminierfolie (3) festgelegt sind,
- Einbringens der Laminierfolienanordnung zwischen einer ersten (1) und einer zweiten Glasscheibe (2) und
- Verbindens der ersten (1) und zweiten Glasscheibe (2) und der Laminierfolienanordnung zu einem Verbundglas unter dichter Verbindung der ersten und zweiten Glasscheibe (1, 2) entlang deren Rändern,
- **gekennzeichnet durch** ein Aufbringen von beabstandeten Abschnitten mit veränderter Oberfläche oder Oberflächenstruktur (9, 12, 15, 17, 19, 20) im Bereich der Außenseite (1a) ersten, der metallisch reflektierenden Oberfläche (4a) der Plättchen (4) zugewandten Glasscheibe (1).

11. Verfahren nach Anspruch 10, **dadurch gekennzeichnet, dass** die Abschnitte mit veränderter Oberfläche oder Oberflächenstruktur (15) über einen selektiven Ätzvorgang einer Außenseite der ersten Glasscheibe (1) erzeugt werden.

12. Verfahren nach Anspruch 10, **dadurch gekennzeichnet, dass** die Abschnitte mit veränderter Oberfläche oder Oberflächenstruktur (17) durch ein selektives Sandstrahlen einer Außenseite der ersten Glasscheibe (1) erzeugt werden.

13. Verfahren nach Anspruch 10, **dadurch gekennzeichnet, dass** die Abschnitte mit veränderter Oberfläche oder Oberflächenstruktur (20) durch eine Oberflächengravur der Außenseite (1a) der ersten Glasscheibe (1) erzeugt sind.

14. Verfahren nach Anspruch 10, **dadurch gekennzeichnet, dass** die Abschnitte mit veränderter Oberfläche oder Oberflächenstruktur durch ein selektives Aufbringen einer ein phosphoreszierendes Material enthaltenden Farbe (19) erzeugt werden.

15. Verfahren nach Anspruch 10, **dadurch gekennzeichnet, dass** die Abschnitte mit veränderter Oberfläche oder Oberflächenstruktur (12) durch eine selektive Laserbestrahlung, insbesondere mit einem CO₂-Laser erzeugt werden.
